# EUROPEAN PATENT SPECIFICATION

(11) **EP 1 879 792 B1**
(45) Date of publication and mention of the grant of the patent: **22.04.2015**
(21) Application number: 06747779.4
(22) Date of filing: 11.05.2006
(51) Int. Cl.: B63B 25/24, B60P 7/08, B64D 9/00

(54) **LASHING DEVICE FOR CARGO ON A SHIP AND A CARGO DECK PROVIDED WITH SUCH A LASHING DEVICE**
VERZURRVORRICHTUNG FÜR FRACHT AUF EINEM SCHIFF UND MIT SOLCH EINER VERZURRVORRICHTUNG VERSEHENES FRACHTDECK
DISPOSITIF D'ACCORAGE POUR CHARGEMENT SUR UN BATEAU ET PONT DE CHARGEMENT DOTE D'UN TEL DISPOSITIF

(30) Priority: 11.05.2005 SE 0501064
(43) Date of publication of application: 23.01.2008
(73) Proprietor: MacGregor Sweden AB, 40040 Göteborg (SE)
(72) Inventor: NORDSTRÖM, Jonas, 423 36 Torslanda (SE); GAIR, William, 415 05 Göteborg (SE)
(74) Representative: Mossmark, Anders Lennart
(86) International application number: PCT/SE2006/000560
(87) International publication number: WO 2006/121398

(56) References cited:
- DE-U1- 20 020 860
- FR-A1- 2 864 940
- FR-A1- 2 864 940
- GB-A- 2 070 523
- GB-A- 2 070 523
- GB-A- 2 167 354
- US-A- 3 353 780
- US-A- 3 685 778
- US-A- 5 137 405
- US-A- 5 178 346
- DATABASE WPI Week 199812, Derwent Publications Ltd., London, GB; Class Q24, AN 1998-125650, XP003003195 & JP 10 007 073 A (MITSUBISHI JUKOGYO KK) 13 January 1998

## Description

### TECHNICAL FIELD

The present invention relates to an anchoring device for attaching retaining devices for cargo on a cargo deck of a vessel, according to the preamble to the following Claim 1.

The present invention also relates to a cargo deck of a vessel that is provided with anchoring devices, according to the preamble to the following Claim 4.

### BACKGROUND ART

Before transportation by sea, cargo, for example cars and lorries, is usually secured to the cargo deck that carries the cargo. The securing ties usually consist of strong textile bands with metal hooks at the ends that are attached to the vehicle, either to eyes on the vehicle or to the wheels. At the other end, the hooks are usually attached to circular holes in the deck plating or in the deck plates. The deck plates can be made of metal or wood, such as block board or sandwich laminate, which has good bearing ability but requires special reinforcement in the form of so-called lashing fittings around the edges of the holes. Even with the use of reinforcing fittings, the local stresses in the wood around the hole are relatively large, with the risk that the wood can spilt and that the anchoring device can come loose. A known lashing device according to the prior art is disclosed in GB 2 070 523.

### DISCLOSURE OF INVENTION

The object of the present invention is to eliminate the abovementioned disadvantages and to make fastening holes without making holes in the deck plates.

The said object is achieved by means of an anchoring device according to the invention, with the characteristics that are described in the following Claim 1.

The said object is also achieved by means of a cargo deck provided with anchoring devices with the characteristics that are described in the following Claim 4.

By means of the anchoring device and the cargo deck according to the invention, an integrated solution is provided where the anchoring device is integrated into the supporting structure of the cargo deck, while at the same time it is possible to use deck plates that have a simple construction.

### BRIEF DESCRIPTION OF DRAWINGS

The invention will be described in the following in greater detail in the form of an example, with reference to the attached drawings, in which
Figure 1 is a partially broken view from above of an anchoring device according to the invention,
Figure 2 is a cross section through the anchoring device and

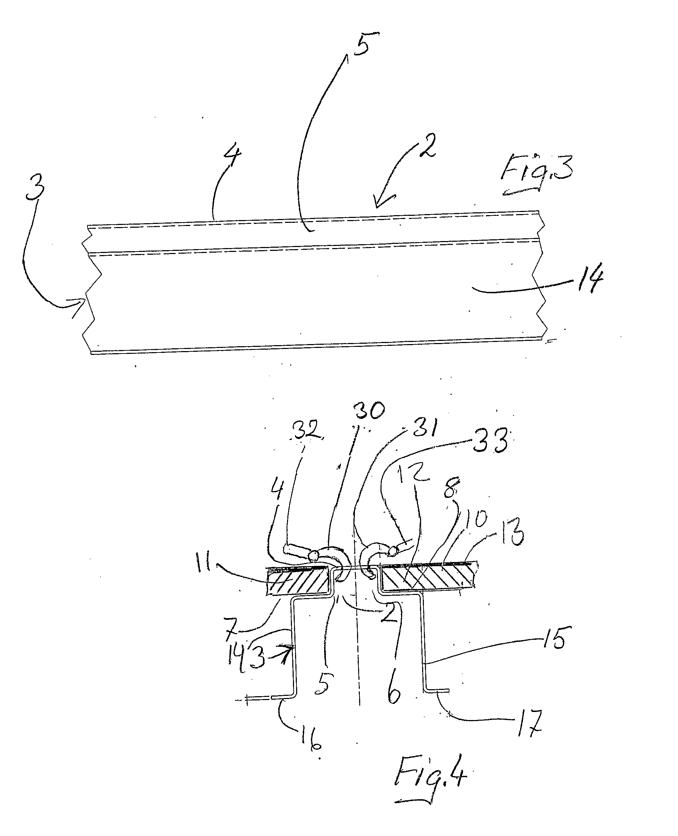

Figure 3 is a partially broken side view of the anchoring device.
Figure 4 is a cross section through a part of the deck structure and an anchoring device.
Figure 5 is a side view of a deck structure with a cargo deck according to the invention and
Figure 6 is a view from above of the deck structure with deck plates removed for the sake of clarity, with the exception of one section.

### MODE(S) FOR CARRYING OUT THE INVENTION

As shown in the figures, the anchoring device 1 is designed as a raised part 2 of a support rail 3 or supporting beam. In the example, the raised part of the support rail is a U-shaped folded part in the shape of an inverted U that is a part of the support rail that has similarly the overall appearance of an inverted U. By means of this design, that is by means of a small U-profile as a part of the essentially U-profile shape, an upper surface 4 is created that can be flat and horizontal or slightly arched and that, viewed in cross section or at the end, has a transition to two vertical longitudinal wall parts 5, 6 that in turn have a transition to similarly longitudinal upward-facing contact surfaces 7, 8 that together with the vertical wall parts form ledges for deck plates 10, 11 that are comprised in the cargo deck of a vessel. More specifically, the edges 12 of the deck plates 10, 11 rest on the longitudinal ledges of the support rail 3. The ledges are suitably dimensioned in a vertical direction in relation to the thickness of the deck plate in such a way that the load-bearing surface 13 of the deck plate is advantageously on a level with the upward-facing surface of the raised part 2 of the support rail so that together these surfaces form a continuous deck surface. The deck plates can rest loosely on the ledges of the support rails or can be screwed, riveted or bolted onto the support rails.

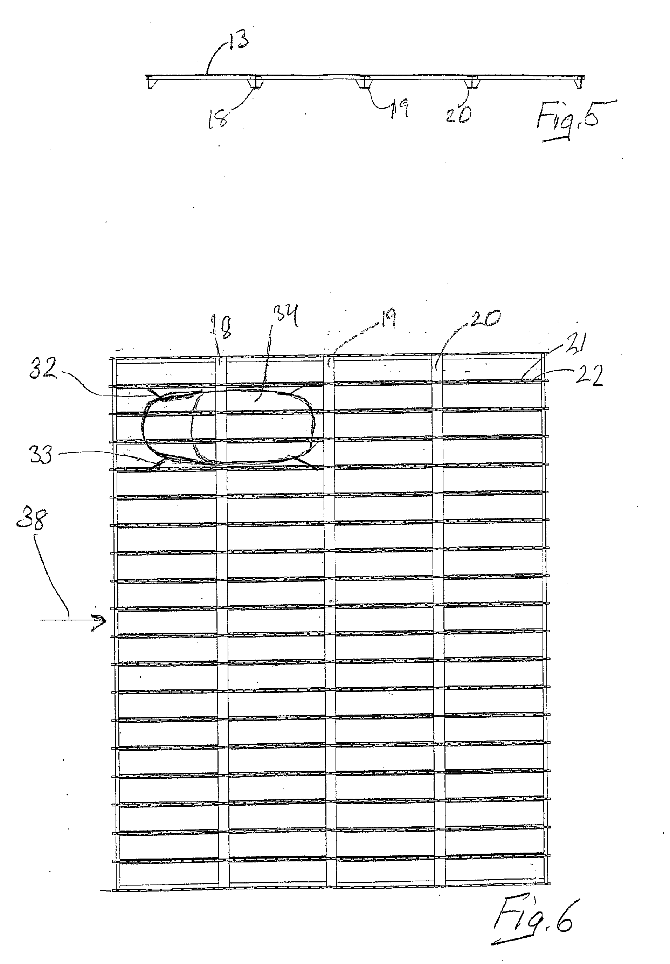

In addition, the support rail 3 has two main walls 14, 15 that project downwards suitably parallel to each other, for example vertically downwards from the ledges, to create a rigid structure and at the bottom these main walls have a transition to flanges 16, 17 that are longitudinal and project outwards to the side in cross section, and that, in turn, can rest on transverse supporting beams 18, 19, 20 in deck structures, see Figures 5 and 6.

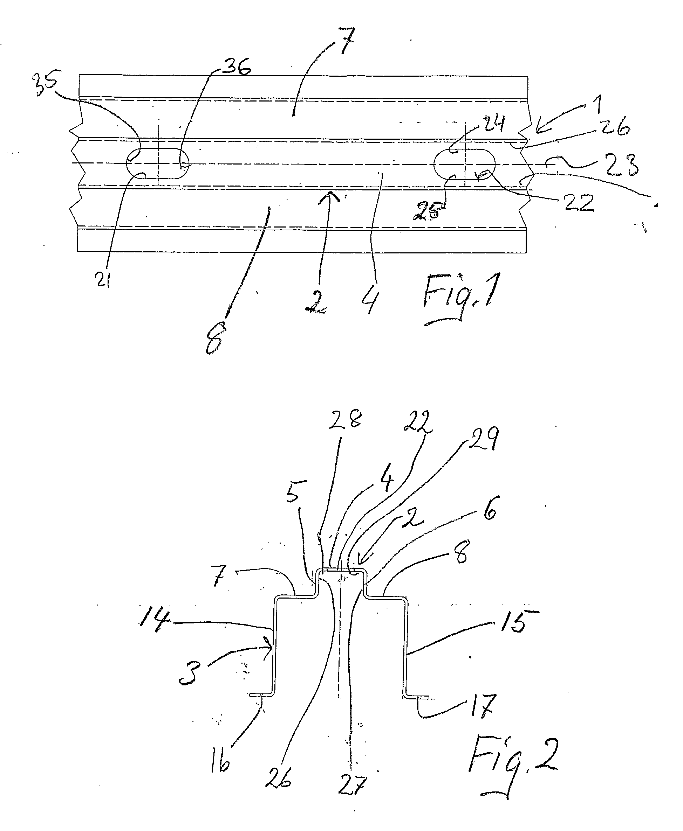

As is shown most clearly in Figures 1 and 6, the support rail 3 is provided with a row of anchoring holes 21, 22 in the raised part 2 of the support rail, more specifically in the upward-facing part 4. The holes are a suitable size and shape, for example so-called elongated holes, that is holes with a larger extent in one direction, suitably the longitudinal direction of the rail, that is along its longitudinal axis 23, in relation to the transverse direction, and have suitably a clearly smaller width than the width of the upper part, that is the width of the upward-facing part 4, and are suited to the thickness of the material so that the positions of the hole edges 24, 25 that face each other are at a suitable distance from the inner walls 26, 27 of the raised part that face each other. By this means, a suitable engagement part 28, 29 is created with space for anchoring devices such as fixing hooks 30, 31 with securing bands 32, 33, ropes, or wires, the other end of which is attached to the cargo, for example a vehicle 34, as shown in Figure 6.

The anchoring holes 21, 22 are located at suitable intervals along the support rail, for example three holes per running metre, in order to create a flexible anchorage irrespective of the size of the vehicle. For example, it is usually sufficient to have four anchoring locations per vehicle, two at the front and two at the back. The number of holes is limited, so that they do not have a significantly adverse effect on the strength of the support rail. In practice, the securing ties are directed obliquely outwards from the hole in order to prevent movement in a longitudinal direction, that is the rounded parts 35, 36 of the holes form engagement edges for the anchoring devices on the retaining ties. As a result of the shape of the edges of the holes, the anchoring devices are automatically arranged in such a way that the anchoring edges extend in a transverse direction to the direction of the force, that is at the point of contact of an imaginary tangent to the edge of the hole.

Figure 5 is an end view or a schematic cross section viewed in the plane of the deck with its upward-facing load-bearing surface 13, while Figure 6 is a view from above of a section of a cargo deck in a hold of a vessel, with the load-bearing beams 18, 19, 20 able to be designed with special recesses at the points of intersection 37 with the support rails 3, so that the height of the deck structure is minimized. The main supporting beams 18, 19, 20 extend in a transverse direction in relation to the longitudinal axis of the ship in the usual way, while the integrated anchoring device 1 and the support rail 3 extend in the longitudinal direction, that is in the direction of the arrow 38. Accordingly, if for example the vessel is a so-called ro-ro vessel, rolling cargo, such as vehicles, will naturally be positioned in the longitudinal direction of the ship which will usually facilitate loading and unloading, irrespective of whether the cargo ports are located at the stern or in the side of the vessel.

The construction of the deck structure is cost-effective, as the deck plates 10, 11 can be constructed as simple rectangular plates, for example made of block board or plywood, the end edges of which simply rest on bearing surfaces on the support rails and are held in position in all directions: in the transverse direction of the ship, by the size of the plate being arranged to be as close a fit as possible between two facing vertical wall parts 5, 6 of two support rails 3 that run a uniform distance apart, and in the longitudinal direction of the ship, by the deck plates completely filling the deck space, whereby they abut each other and abut the end walls of the hold (not shown). As mentioned above, it is possible to secure the deck plates to the support rails, but in principle this is not necessary.

The invention is not limited to the embodiment that is described above and illustrated in the drawings, but can be varied within the framework of the following claims. For example, it is possible for the support rails 3 to be completely self-supporting and to extend from wall to wall in the hold, and hence instead to extend in a transverse direction in relation to the longitudinal axis of the ship. The profile form of the transverse rails can differ without affecting the basic function. With different sizing, it is possible for the anchoring devices, normally hooks, on the securing ties also to engage under the contact surfaces 7, 8, that is around the corners between the raised part and the contact surfaces. The support rails are advantageously constructed of folded metal plate but it is also possible for them to be constructed of extruded light metal profiles.

## Claims

1. Anchoring device for attaching retaining devices for cargo (34) on a cargo deck of a vessel, wherein said anchoring device comprises an elongated fixing and support rail (3), said rail having an upper rail part (2) that has a row of openings (22) in which devices (30-33) for securing the cargo can be securely attached **characterised in that** on each side of the upper rail part (2) there is an upward-facing contact surface (7-8) at a lower level than the upper rail part (2), which contact surfaces (7-8) form ledges for deck plates (10-11), wherein the fixing and support rail (3) has side walls (14, 15) that project downwards from the contact surfaces (7-8) and have a transition to elongated supporting flanges (16, 17).

2. Anchoring device according to claim 1, **characterized in that** the contact surfaces (7,8) project out to the side, viewed in cross section of the rail, on both sides of the upper rail part (2), that is essentially an inverted U shape in cross section.

3. Anchoring device according to claim 1, **characterized in that** the openings (22) have a transverse dimension that is less than the width of the upper rail part (2), so that an engagement edge (24, 25) is created for anchoring devices (30, 31) on the retaining devices for cargo (34).

4. Cargo deck for cargo (34) on a vessel and comprising a load-bearing surface (13) and anchoring devices (3) for the cargo, **characterized in that** elongated fixing and support rails (3) are comprised in the cargo deck's supporting deck structure, each rail having an upper rail part (2) that is located in association with the load-bearing surface (13) of the cargo deck and that has a row of openings (22) in which devices (30-33) for securing the cargo can be securely attached and **in that** on each side of the upper rail part (2) there is a contact surface (7-8) at a lower level than the upper rail part, which contact surfaces form ledges for deck plates (9, 10) that form the major part of the load-bearing surface and wherein the fixing and support rails (3) have side walls (14, 15) that project downwards from the contact surfaces (7-8) and have a transition to elongated supporting flanges (16, 17).

5. Cargo deck according to claim 4, wherein the deck plates (10, 11) consist of wooden slabs that rest on the contact surfaces (7-8) and in that the contact surfaces (7-8) are located at a level below the upper rail part (2) that corresponds to the thickness of the wooden slabs.

6. Cargo deck according to claim 4 or claim 5, **characterized in that** the fixing and support rails (3) are arranged to extend in the longitudinal direction of the ship and to be supported by transverse supporting beams (18-20).

## Patentansprüche

1. Verankerungsvorrichtung für die Befestigung von Haltevorrichtungen für Frachtgut (34) auf einem Frachtdeck eines Seefahrzeuges, wobei die Verankerungsvorrichtung eine längliche Fixier- und Stützschiene (3) umfasst, wobei die Schiene einen oberen Schienenteil (2) aufweist, welcher eine Reihe von Öffnungen (22) aufweist, in welchen Vorrichtungen (30-33) zur Befestigung des Frachtguts zuverlässig befestigt werden können, **dadurch gekennzeichnet, dass** an jeder Seite des oberen Schienenteils (2) eine nach oben gewandte Kontaktfläche (7-8) auf einer niedrigeren Ebene als der obere Schienenteil (2) vorgesehen ist, welche Kontaktflächen (7-8) Vorsprünge für Deckplatten (10-11) bilden, wobei die Fixier- und Stützschiene (3) Seitenwände (14, 15) aufweist, welche von den Kontaktflächen (7-8) nach unten vorspringen und einen Übergang zu länglichen Stützflanschen (16, 17) aufweisen.

2. Verankerungsvorrichtung nach Anspruch 1, **dadurch gekennzeichnet, dass** die Kontaktflächen (7, 8), im Querschnitt der Schiene betrachtet, seitlich herausragen, an beiden Seiten des oberen Schienenteils (2), welcher im Querschnitt im Wesentlichen eine umgekehrte U-Form darstellt.

3. Verankerungsvorrichtung nach Anspruch 1, **dadurch gekennzeichnet, dass** die Öffnungen (22) eine transversale Dimension aufweisen, die kleiner ist als die Breite des oberen Schienenteils (2), so dass eine Eingriffskante (24, 25) für Verankerungsvorrichtungen (30, 31) auf den Haltevorrichtungen für Frachtgut (34) gebildet wird.

4. Frachtdeck für Frachtgut (34) auf einem Seefahrzeug, umfassend eine Tragfläche (13) und Verankerungsvorrichtungen (3) für das Frachtgut, **dadurch gekennzeichnet, dass** längliche Fixier- und Stützschienen (3) in der tragenden Deckstruktur des Frachtdecks umfasst sind, wobei jede Schiene einen oberen Schienenteil (2) aufweist, welcher in Verbindung mit der Tragfläche (13) des Frachtdecks angeordnet ist, und welcher eine Reihe von Öffnungen (22) aufweist, in welchen Vorrichtungen (30-33) zur Befestigung des Frachtguts zuverlässig befestigt werden können, und dass an jeder Seite des oberen Schienenteils (2) eine Kontaktfläche (7-8) auf einer niedrigeren Ebene als der obere Schienenteil vorgesehen ist, welche Kontaktflächen Vorsprünge für Deckplatten (9, 10) bilden, welche den größten Teil der Tragfläche bilden, und wobei die Fixier- und Stützschienen (3) Seitenwände (14, 15) aufweisen, die von den Kontaktflächen (7-8) nach unten vorspringen und einen Übergang zu länglichen Stützflanschen (16, 17) aufweisen.

5. Frachtdeck nach Anspruch 4, wobei die Deckplatten (10, 11) aus Holzplatten bestehen, die auf den Kontaktflächen (7-8) ruhen, und dass die Kontaktflächen (7-8) auf einer der Dicke der Holzplatten entsprechenden Ebene unter dem oberen Schienenteil (2) angeordnet sind.

6. Frachtdeck nach Anspruch 4 oder Anspruch 5, **dadurch gekennzeichnet, dass** die Fixier- und Stützschienen (3) angeordnet sind, um sich in der Längsrichtung des Schiffs zu erstrecken und um durch unterstützende Querträger (18-20) getragen zu werden.

## Revendications

1. Dispositif d'ancrage pour la fixation des dispositifs de retenue pour cargaison (34) sur un pont de chargement d'un navire, ledit dispositif d'ancrage comprenant un rail allongé de soutien et de fixation (3), ledit rail ayant une partie supérieure du rail (2) qui présente une rangée d'ouvertures (22) dans lesquelles des dispositifs (30-33) pour fixer la cargaison peuvent être solidement fixés, **caractérisé en ce que**, sur chaque côté de la partie supérieure de rail (2), une surface de contact (7-8) orientée vers le haut est arrangée à un niveau inférieur à la partie supérieure du rail (2), lesdites surfaces de contact (7-8) formant des rebords pour les plaques de plate-forme (10-11), ledit rail de soutien et de fixation (3) présentant des parois latérales (14, 15) qui font saillie vers le bas à partir des surfaces de contact (7-8) et présentent une transition à des brides de support allongées (16, 17).

2. Dispositif d'ancrage selon la revendication 1, **caractérisé en ce que** les surfaces de contact (7, 8) font saillie sur le côté, vu en section transversale du rail, sur les deux côtés de la partie supérieure du rail (2), qui est essentiellement une forme en U renversé en section transversale.

3. Dispositif d'ancrage selon la revendication 1, **caractérisé en ce que** les ouvertures (22) présentent une dimension transversale qui est inférieure à la largeur de la partie supérieure du rail (2), si bien qu'un bord d'engagement (24, 25) est créé pour les dispositifs d'ancrage (30, 31) sur les dispositifs de retenue pour cargaison (34).

4. Plate-forme de chargement de cargaison (34) sur un navire et comprenant une surface porteuse de poids (13) et des dispositifs d'ancrage (3) pour cargaison, **caractérisée en ce que** des rails allongés de soutien et de fixation (3) sont compris dans la structure de plate-forme de support de la plate-forme de charge, chaque rail comportant une partie supérieure du rail (2) qui est localisée en association avec la surface porteuse de poids (13) de la plate-forme de chargement et qui présente une rangée d'ouvertures (22) dans lesquelles des dispositifs (30-33) pour fixer la cargaison peuvent être solidement fixés et **en ce que** sur chaque côté de la partie supérieure du rail (2), une surface de contact (7-8) est arrangée à un niveau inférieur à la partie supérieure du rail, lesdites surfaces de contact formant des rebords pour les plaques de plate-forme (9, 10) qui forment la plus grande partie de la surface porteuse de poids, et les rails allongés de soutien et de fixation (3) présentant des parois latérales (14, 15) qui font saillie vers le bas à partir des surfaces de contact (7-8) et présentent une transition à des brides de support allongées (16, 17).

5. Plate-forme de chargement selon la revendication 4, dans laquelle les plaques de plate-forme (10, 11) sont constituées de plaques de bois qui s'appuient sur les surfaces de contact (7-8), et en ce que les surfaces de contact (7-8) sont situées à un niveau inférieur à la partie supérieure du rail (2) qui correspond à l'épaisseur des plaques de bois.

6. Plate-forme de chargement selon la revendication 4 ou la revendication 5, **caractérisée en ce que** les rails allongés de soutien et de fixation (3) sont agencés de manière à s'étendre dans la direction longitudinale du navire et à être supportés par des poutres de support transversales (18-20).
